# EUROPÄISCHE PATENTSCHRIFT

(11) **EP 1 872 180 B1**
(45) Veröffentlichungstag und Bekanntmachung des Hinweises auf die Patenterteilung: **07.11.2012**
(21) Anmeldenummer: 06708759.3
(22) Anmeldetag: 14.03.2006
(51) Int. Cl.: G05B 19/042

(54) **VERFAHREN ZUM SICHEREN BEDIENEN EINES FELDGERÄTES DER AUTOMATISIERUNGSTECHNIK**
METHOD FOR SAFELY OPERATING AN AUTOMATION TECHNOLOGY FIELD DEVICE
PROCEDE DE COMMANDE SECURISEE D'UN APPAREIL DE TERRAIN DE LA TECHNIQUE D'AUTOMATISATION

(30) Priorität: 23.03.2005 DE 102005014050
(43) Veröffentlichungstag der Anmeldung: 02.01.2008
(73) Patentinhaber: Endress + Hauser Process Solutions AG, 4153 Reinach (CH)
(72) Erfinder: KORSTEN, Klaus, 79585 Steinen (DE)
(74) Vertreter: Andres, Angelika Maria
(86) Internationale Anmeldenummer: PCT/EP2006/060710
(87) Internationale Veröffentlichungsnummer: WO 2006/100196

(56) Entgegenhaltungen:
- DE-A1- 19 954 358
- DE-B- 1 022 704
- US-A1- 2004 010 795
- US-A1- 2004 193 287
- US-A1- 2005 033 886
- HARALD BRUNS, ULRICH HEMPEN, WOLFGANG OTT, ROLF VAHLDIECK: "Ein Konzept für eine COM/DCOM-basierte herstellerunabhängige Integration von Feldgeräten in Engineeringsysteme", ATP AUTOMATISIERUNGSTECHNISCHE PRAXIS, 1999, pages 34-40,

## Beschreibung

Die Erfindung betrifft ein Verfahren zum sicheren Bedienen eines Feldgerätes der Automatisierungstechnik.

In der Automatisierungstechnik, Prozessautomatisierungstechnik und Farbikautomatisierung, werden vielfach Feldgeräte eingesetzt, die zur Erfassung und / oder Beeinflussung von Variablen dienen. Beispiele für derartige Feldgeräte sind Füllstandsmessgeräte, Massendurchflussmessgeräte, Druck- und Temperaturmessgeräte, pH-Redoxpotential- Messgeräte, Leitfähigkeitsmessgeräte etc. für die Prozessautomatisierungstechnik, die als Sensoren die entsprechenden Prozessvariablen Füllstand, Durchfluss, Druck, Temperatur, pH-Wert bzw. Leitfähigkeitswert erfassen.

In der Fabrikautomatisierung werden hingegen Frequenzregelgeräte, Motorstarter, Servomotoren sowie Sicherheitssysteme zum Schutz von Mensch und/oder Maschine eingesetzt.

Neben reinen Messgeräten sind auch Systeme bekannt, die noch zusätzliche weitere Aufgaben erfüllen. Zu nennen sind hier Elektrodenreinigungssysteme, Kalibriersysteme sowie Probennehmer, für die Prozessindustrie.

Zur Beeinflussung von Variablen in einer Fabrikautomatisierungsanwendung können Motoren dienen, die über ein Frequenzregelgerät in ihrer Geschwindigkeit steuerbar sind.

Zur Beeinflussung von Variablen in einer Prozessanwendung dienen Aktoren, z. B. Ventile, die den Durchfluss einer Flüssigkeit in einem Rohrleitungsabschnitt steuern oder Pumpen, die es erlauben den Füllstand in einem Behälter zu verändern.

Eine Vielzahl solcher Feldgeräte wird von der Firma Endress + Hauser® hergestellt und vertrieben.

Häufig sind Feldgeräte über einen Feldbus (Profibus®, Foundation®-Fieldbus, HART® etc.) mit übergeordneten Einheiten z. B. Leitsystemen bzw. Steuereinheiten verbunden. Diese übergeordneten Einheiten dienen zur Prozesssteuerung, Prozessvisualisierung, Prozessüberwachung oder dem prozessnahem Asset-Management.

Zur Bedienung der Feldgeräte sind entsprechende Bedienprogramme (Bedientools) notwendig. Diese Bedienprogramme können eigenständig ablaufen (Endress+Hauser FieldCare, Pactware, AMS, PDM) oder aber auch in Leitsystem-Anwendungen (Siemens Step7, ABB Symphony, PCS7, PRN Viewer, AMSinside) integriert sein.

Eine Bedienung von Feldgeräten ist mit herkömmlichen vielfach in der Prozessautomatisierungstechnik verwendeten Gerätebeschreibungen (Device Descriptions DDs oder Electronic Device Descriptions EDs) möglich.

Für eine umfänglichere Bedienung der Feldgeräte inklusive alle Funktionen einschließlich graphischer Bedienelemente und hinterlegten Berechnungen, wie z. B. eine Linearisierungstabelle für die Beziehung zwischen Füllstand und dem Volumen eines Tanks, müssen diese Funktionen dem Bedienprogramm (Bedientool) bekannt gemacht werden.

Dies ist über spezielle ausführbare Gerätebeschreibungsdateien über z. B. Gerätetreiber DTM (Device Type Manager), die den FDT (Field Device Tool)-Spezifikationen entsprechen, möglich.

Die als Industriestandard geltenden FDT-Spezifikationen wurden von der PNO Profibus® Nutzerorganisation in Zusammenarbeit mit dem ZVEI (Zentralverband Elektrotechnik- und Elektronikindustrie) entwickelt. Die aktuelle FDT-Spezifikation 1.2 inklusive dem Addendum für die Kommunikation FOUNDATION Fieldbus ist über den ZVEI bzw. die PNO bzw. die FDT-JIG Joint Interest Group erhältlich. Mit der Unterstützung weiterer Kommunikaitonsarten ist in den nächsten Jahren zu rechen, hierzu werden Interbus S, DeviceNet der ODVA und AS Interface gehören. Des Weiteren sind hier Kommunikationsprotokolle wie SERCOS und eine Vielzahl firmenspezifische Protokolle vorstellbar.

Viele Gerätehersteller liefern daher für die beide Arten der Gerätebeschreibung Files an. Die komfortablere Art der Bedienung ist die zu den Feldgeräten gehörende und als DTMs (Device Type Manager) bezeichnete Gerätetreiber, die alle Daten und Funktionen des jeweiligen Feldgeräts kapseln und gleichzeitig eine graphische Benutzeroberfläche zur Verfügung stellen.

Mit Hilfe dieser Gerätetreiber ist eine geräte- und herstellerübergreifende Bedienung von Feldgeräten mit entsprechenden Bedienprogrammen möglich.

Die DTM Gerätetreiber benötigen als Laufzeitumgebung eine Rahmen-Applikation (FDT-Frame-Application). Sie ermöglichen u. a. einen Zugriff auf verschiedene Daten der Feldgeräte (z.B. Geräteparameter, Messwerte, Diagnoseinformationen, Statusinformationen etc.) sowie den Aufruf von speziellen Funktionen, die einzelne Gerätetreiber zur Verfügung stellen.

Rahmen-Applikation und Gerätetreiber DTM arbeiten nach dem Client-Server Prinzip.

DDs oder EDDs benötigen hingegen einen Interpreter, da diese von sich aus nicht eigenständig lauffähige Softwarekomponenten sind.

Häufig sind Feldgeräte insbesondere in chemischen Anlagen der Prozessindustrie oder bei Robotergesteuerten Anlagen in sicherheitskritische Abläufe integriert. Änderungen an den Einstellungen einzelner Feldgeräte können erhebliche Auswirkungen auf die Sicherheit haben. Die verantwortlichen Anlagenbetreiber müssen deshalb sicherstellen, dass nur geschultes Personal Einstellungen an einem Feldgerät vornehmen kann. Prinzipiell gibt es zwei Möglichkeiten, Änderungen der Einstellungen an einem Feldgerät durch gezielten Parameterzugriff durchzuführen.

Eine erste Möglichkeit besteht darin, dass die Bedienperson das Feldgerät aufsucht und über eine Tastatur Parameter direkt am Feldgerät eingibt.

Eine weitere Möglichkeit bietet der Fernzugriff über ein Bussystem. Hierfür wird eine Bedieneinheit mit einem entsprechenden Bedientool benötigt. Diese Bedientools können wiederum auf fest installierten Rechnern, in einer Leitwarte oder auch auf einem tragbaren Rechner (z. B. Laptop) ablaufen. Diese Rechner kommunizieren über ein Protokoll mit dem Feldgerät und über Eingaben an der Bedieneinheit, werden die entsprechenden Parameter im Feldgerät geändert.

Folgende Zugriffsbeschränkungen (Sicherheitsabfragen) sind für diese beiden Möglichkeiten bekannt. Abfrage eines Sicherheitscodes am Feldgerät direkt bzw. Abfrage eines Sicherheitscodes an der Bedieneinheit.

Die Abfrage eines Sicherheitscodes an der Bedieneinheit kann auf unterschiedlichen Ebenen erfolgen. Zum einen auf der Systemebene, d. h. bereits beim Einloggen an der Bedieneinheit erfolgt die Abfrage; zum anderen auf der Programmebene, d. h. wenn das entsprechende Bedienprogramm gestartet wird.

Auf der Systemebene ist die Vergabe von verschiedenen Sicherheitscodes entsprechend Administrator-Rechten bzw. einfachen User-Rechten möglich. Hierdurch kann das Starten des Systems verhindert werden.

Eine derartige Differenzierung ist auch auf der Programmebene möglich. Nur bestimmte Benutzer können dann das entsprechende Programm, das Bedienprogramm, starten. Nach dem Starten des Bedienprogramms kann normalerweise der Anwender auf alle Parameter eines Feldgerätes zugreifen und damit diese auch ändern. Allgemein wird die Vergabe von Zugriffsrechten bei Rechnersysteme in so genannten Benutzerrollen verwaltet.

Häufig sind die Parameter an einem Feldgerät nicht alle gleichmäßig kritisch. Es gibt Abstufungen zwischen unterschiedlichen Kategorien von Parametern. H ochkritische Parameter dürfen jedoch nur von entsprechend geschultem Personal geändert werden. Weniger kritische Parameter können auch vom normalen Bedienpersonal eingestellt werden. Folgendes Beispiel soll dies erläutern.

Besitzt ein MSR-Techniker eine Schulung auf Bussystem Profibus und für spezielle Druckmessgeräte, so sollte diese Person keinen Zugriff auf Druckgeräte eines anderen Bussystems (z. B. Foundation Fieldbus) bzw. auf andere Gerätetypen haben.

Mit den bisher gekannten Schutzmechanismen ist ein differenzierter Zugriffschutz für Feldgeräte der Prozessautomatisierungstechnik nicht möglich. Für eine größere Anlage bedeutet dies einen erheblichen Sicherheitsaufwand, was natürlich die Auditierbarkeit erschwert. Bei einer Auditierung erfolgt eine Überprüfung, ob die SOPs (service operating procedures) eingehalten werden. Dis US Patentanmeldung US 2005/0033886 beschreibt ein Verfahren zur sicherung des Datenaustauschs zwischen einer externen Zugriffseinheit und einem Feldgerät. Über die Zugriffseinheit kann der Zugriff auf das Feldgerät erfolgen, wobei die Zugriffsrechte gezielt an berechtigte Personen verteilt werden.

Aufgabe der Erfindung ist es deshalb, ein Verfahren zum Bedienen eines Feldgerätes der Automatisierungstechnik anzugeben, das die oben genannten Nachteile nicht aufweist, das insbesondere einen sicheren und einfachen Zugriff auf einzelne Feldgeräte ermöglicht.

Gelöst wird diese Aufgabe durch das im Anspruch 1 angegebene Verfahren. Vorteilhafte Weiterentwicklungen der Erfindung sind in den Unteransprüchen angegeben.

Die wesentliche Idee der Erfindung besteht darin, dass einer Gerätetreiberdatei für ein Feldgerät, die die Funktionalität des Feldgerätes beschreibt, zusätzlich eine Sicherheitsabfrage zugeordnet ist, die den personenspezifischen Zugriff auf ein Feldgerät bzw. auf einzelne Parameter oder Funktionalitäten des Feldgerätes regelt.

In der Erfindung ist die Benutzerrolle in der Gerätetreiberdatei gespeichert. Dadurch ist eine einfache Zuordnung Benutzerrolle und Gerätetreiberdatei möglich.

Bei der Gerätetreiberdatei kann es sich zum Beispiel um einen DTM oder DD/EDD handeln.

Mit Hilfe des erfindungsgemäßen Verfahrens ist auch eine einfache und sichere Offline-Bedienung von Feldgeräten möglich. Parameteränderungen auch bei der Offline-Bedienung von Feldgeräten sind nur mit einer entsprechenden Berechtigung möglich.

Nachfolgend ist die Erfindung anhand eines in der Zeichnung dargestellten Ausführungsbeispiels näher erläutert.

Es zeigen:

Fig. 1 schematische Darstellung eines Netzwerks der

Prozessautomatisierungstechnik mit mehreren

Feldgeräten;

Fig. 2 schematische Darstellung einer herkömmlichen Kommunikationsverbindung zwischen einem Bedienprogramm und mehreren Feldgeräten;

Fig. 3 Flussdiagramm für das erfindungsgemäße Verfahren.

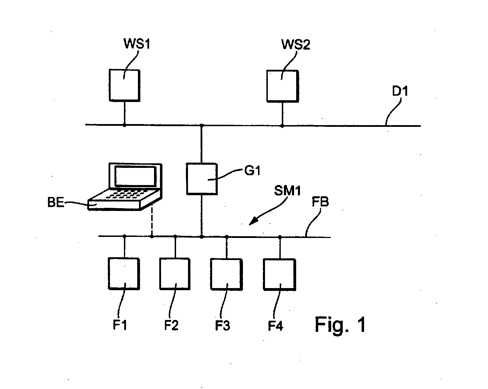

In Fig. 1 ist ein Kommunikationsnetzwerk der Prozessautomatisierungstechnik näher dargestellt. An einen Datenbus D1 sind mehrere Rechnereinheiten (Workstations) WS1, WS2 angeschlossen. Diese Rechnereinheiten können als übcrgeordnete Einheiten (Leitsystem bzw. Steuereinheit) zur Prozessvisualisierung, Prozessüberwachung und zum Engineering aber auch zum Bedienen und Überwachen von Feldgeräten dienen. Der Datenbus D1 arbeitet z. B. nach dem Profibus® DP-Standard oder nach dem HSE (High Speed Ethemet)- Standard der Foundation® Fieldbus. Über ein Gateway G1, das auch als Linking Device oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4 die über einen Feldbus FB miteinander verbunden sind. Bei den Feldgeräten F1, F2, F3, F4 können es sich sowohl um Sensoren oder um Aktoren handeln. Der Feldbus FB arbeitet entsprechend nach einem der bekannten Feldbus-Standards Profibus, Foundation Fieldbus oder HART. Mit dem Feldbus FB ist temporär eine tragbare Rechnereinheit BE verbunden.

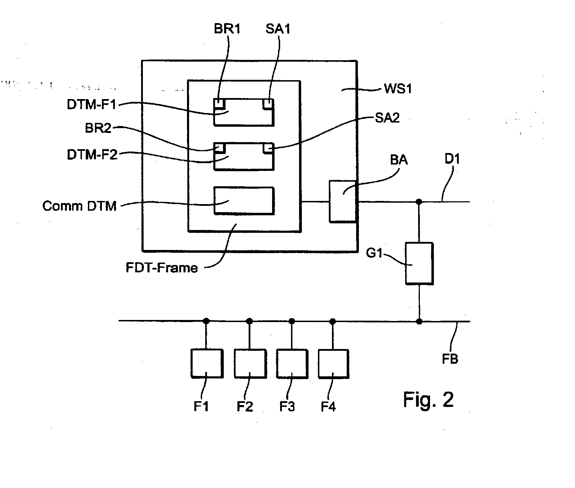

In Fig. 2 ist ein Bedienprogramm, das auf einer der Steuereinheiten WS1, WS2 bzw. auf der Bedieneinheit BE ablaufen kann, schematisch dargestellt. Bei dem Bedienprogramm kann es sich z. B. um die Bediensoftware PACTware (PACTware Consortium e.V.) oder FieldCare® (Firma Endress + Hauser®) handeln, die beide als Betriebssystem Microsoft Windows®, 98NT, 2000 benötigen und die als FDT-Frame-Applikation dienen. Die Rahmen-Applikation FDT-Frame ist insbesondere verantwortlich für die Verwaltung der Gerätetreiber DTM in einer Projektdatenbank (projekt database) für die Kommunikation zu den Bussystemen und für die Verwaltung des Gerätekatalogs.

In die Rahmen- Applikation FDT-Frame sind Gerätetreiber z. B. für die Feldgeräte implementiert. Der Übersichtlichkeit halber sind nur zwei Geräte DTMs DTM-F1 und DTM-F2 sowie ein Kommunikations-DTM CommDTM dargestellt. Beispielsweise kapselt der Geräte-DTM DTM-F1 die Daten und Funktionen des Feldgerätes F1. Als Laufzeitumgebung benötigt er die FDT-Frame-Applikation.

Mit Hilfe der Gerätetreiber DTMs ist eine geräte- und herstellerübergreifende Bedienung der Feldgeräte sowie der Aufbau einer Kommunikationsverbindung zwischen der Rechnereinheit WS1 und den Feldgeräten F1, F2, F3, F4 möglich. So erlaubt der Gerätetreiber DTM-F1 Zugriff auf verschiedene Informationen im Feldgerät F1 wie Geräteparameter, Gerätekonfiguration, Abruf von Diagnosedaten und Statusinformationen über eine herstellerspezifische graphische Benutzeroberfläche.

Das FDT-Konzept basiert darauf, dass in eine FDT-Frame-Applikation unterschiedliche Feldgeräte von unterschiedlichen Herstellern über die entsprechenden Geräte-DTMs in einfacher Weise gebunden werden können.

Hardwaremäßig erfolgt die Verbindung über eine Busanschaltung BA, den Datenbus D1, das Gateway G1, den Feldbus FB zum Feldgerät F1.

Im Gerätetreiber DTM-F1 sind erfindungsgemäß eine Sicherheitsabfrage SA1 und eine Benutzerrolle BR1 abgespeichert. Ebenso sind im Gerätetreiber DTM-F2 eine Sicherheitsabfrage SA2 und eine Benutzerrolle BR2 gespeichert. Unter einer Benutzerrolle wird ein Verzeichnis von Personen und deren jeweiligen Berechtigungen (Nutzerrechte) verstanden.

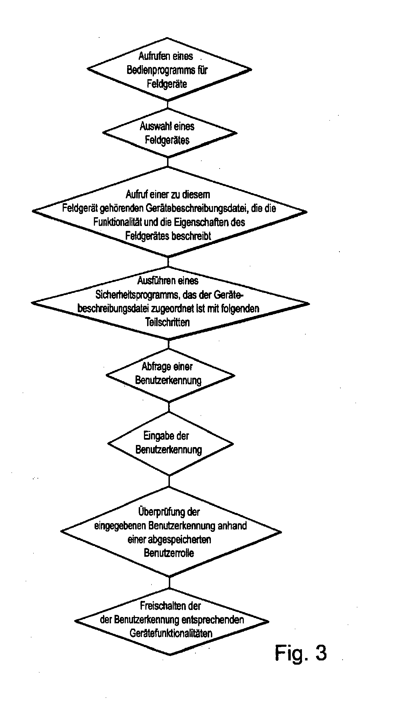

Nachfolgend ist das erfindungsgemäße Verfahren anhand des in der Fig. 3 dargestellten Flussdiagramms näher erläutert. Zur Bedienung des Feldgerätes F1, das über einen Feldbus FB mit einer Bedieneinheit BS1 verbunden ist, ruft der Anwender an der Bedieneinheit BS1 zuerst ein herstellerübergreifendes Bedienprogramm für Feldgeräte, z.Bsp. das Programm "FieldCare" von der Firma Endress+Hauser, auf. Auf der Bildschirmeinheit der Bedieneinheit BS1 wird eine Liste der an den Feldbus angeschlossenen Feldgeräte angezeigt.

Durch "Anklicken" eines der angezeigten Feldgeräte erfolgt die Auswahl des entsprechenden Gerätes, hier das Feldgerät F1. Die zugehörige Gerätetreiberdatei DTM-F1 wird aufgerufen, d.h. geladen bzw. auf die Datei wird zugegriffen. Nach dem Aufruf wird ein Sicherheitsprogramm mit einer Sicherheitsabfrage SA1 gestartet. Die Sicherheitsabfrage SA1 umfasst folgende Einzelschritte: Abfrage einer Benutzerkennung BK, Eingabe der Benutzerkennung BK. Vergleichen der eingegebene Kennung BK mit den Einträgen einer Benutzerrolle BR1. Entsprechend der Benutzerkennung BK werden die der Benutzerkennung BK zugeordneten Gerätefunktionalitäten freigeschaltet. Somit kann sichergestellt werden, dass nur Personen mit einer bestimmten Benutzerkennung, z. B. entsprechend geschultes Personal, Zugriff auf Parameter bzw. auf Funktionalitäten eines Feldgerätes haben.

Mit der entsprechenden Benutzerkennung kann der Anwender Parameteränderungen und Einstellungen vornehmen. So kann er z. B. Grenzwerte, bei denen ein Alarm erzeugt wird, verändern.

Wichtig hierbei ist, dass kein Kommunikationskanal zum Feldgerät geöffnet, bevor nicht die richtige Kennung BK eingegeben wurde.

Unberechtigte Zugriffe auf Daten in Feldgeräten können so besser unterbunden werden.

Das Verfahren eignet sich neben der Online Bedienung von Feldgeräten, bei der eine direkte Kommunikationsverbindung zwischen Bedieneinheit und Feldgerät besteht, besonders auch zur sicheren Offline-Bedienung von Feldgeräten, wo keine direkte Kommunikationsverbindung zu einem Feldgerät hergestellt werden kann. Auch Offline Parameteränderungen können nur von einer entsprechend berechtigten Person durchgeführt werden.

Die Norm IEC61508 SIL (Safty Integrity Level) wurde speziell für sicherheitskritische Anwendungen in der Industrieautomatisierung entwickelt. Durch diese Sicherheitsnorm soll das Risiko in Industrieanlagen, die eine Gefahr für Mensch und Umwelt darstellen, minimiert werden.

So kann gezielt bei SIL-Anwendung sichergestellt werden, dass eine Person A mit einer Benutzerkennung BKA, die keine SIL-Schulung hat, auf SIL-relevante Parameter im Feldgerät keinen Zugriff hat. Eine Person B mit einer Benutzerkennung BKB und einer entsprechenden SIL-Schulung kann dagegen die SIL-relevanten Parameter ändern.

Die Erfindung ist nicht auf Feldgeräte beschränkt, die über eine Gerätetreiberdatei DTM bedienbar sind. Sie ist im Prinzip für alle bekannten Gerätebeschreibungen wie EDDL möglich. Zwar sind DDs/EDDs wie schon beschrieben keine eigene selbständige Programme und somit auch nicht direkt in der Lage einen Zugriffsmechanismus zu verwenden oder zu besitzen. Jedoch ist es möglich aus einer DD / EDD heraus, Programme zu starten, die diese Möglichkeiten besitzen und in gleicher Form agieren können, wie oben beschrieben. Dieser Aufruf anderer Programme könnte mit Hilfe von so genannten OCX oder AcitveX Befehlen geschehen.

Der konkrete Ablauf ist somit für eine DD/EDD - Anwendung gleich der Lösung mit einem DTM. Der einzige Unterschied liegt in der Tatsache, dass die DD/EDD ein separates Sicherheitsprogramm aufruft und dass das separate Sicherheitsprogramm speziell für das Bedientool, das auf DDs bzw. EDD basiert, angepasst werden muss.

In beiden Fällen ist es nun möglich, gemäß der verwendeten Sicherheitsrichtlinien eines Unternehmens zu verfahren, wenn die Zugriffsrechte nicht vorliegen. Dieses kann bis zur Sperrung einer Berechtigung, bei mehrfacher Falscheingabe der Benutzerkennung gehen.

Bei der Sicherheitsabfrage kann es sich auch um eine kombinierte Abfrage Benutzemame Benutzerkennung handeln.

Die vorliegende Erfindung ermöglicht es in einfacher Weise den Zugriff auf Gerätefunktionalitäten einzelner Feldgeräte nur für bestimmte Personen bzw. Personengruppen vorzusehen. Zugriffsrechte können feldgerätespezifisch bis auf einzelne Parameter bzw. auf einzelne Gerätefunktionalitäten individuell vergeben werden. Als mögliche Beispiele seinen hier die unterschiedlichen Parametersätze in Feldgeräten genannt, z.B. Diagnoseparameter, Serviceparameter oder Alarmgrenzen.

So kann z. B. ein Systemverantwortlicher aufgrund seiner Benutzerkennung nur die Alarmparameter in Feldgeräten verändern, die für die Systemsteuerung notwendig sind, aber nicht die Parameter, die einen direkten Einfluss auf die Mess - oder Steuerungsanwendung haben.

Dadurch wird die Betriebssicherheit in einer Anlage erheblich erhöht werden. Änderungen von sicherheitskritischen Parametern in Feldgeräten können nur von Personen, die die entsprechende Berechtigung besitzen, vorgenommen werden.

## Patentansprüche

1. Verfahren zum sicheren Bedienen eines Feldgeräts (F1, F2, F3, F4) der Automatisierungstechnik, das über eine Kommunikationsverbindung mit einer Bedieneinheit (WS1; BE) verbindbar ist, mit folgenden Verfahrensschritten:
a) Aufrufen eines Bedienprogramms für Feldgeräte (F1, F2, F3, F4);
b) Auswahl des Feldgerätes (F1);
c) Aufruf einer zu diesem Feldgerät (F1) gehörenden Gerätebeschreibungsdatei (DTMF1), die die Funktionalität und die Eigenschaften des Feldgerätes (F1) beschreibt;
d) Ausführen eines Sicherheitsprogramms (SA1), das der
Gerätebeschreibungsdatei (DTMF1) zugeordnet ist mit folgenden Teilschritte:
a. Abfrage einer Benutzerkennung (BK1);
b. Eingabe der Benutzerkennung (BK1);
c. Überprüfung der eingegebenen Benutzerkennung (BK1) anhand einer abgespeicherten Benutzerrolle (BR1), die ein Verzeichnis von Personen und deren jeweiligen Berechtigungen enthält: wobei Zugriffsrechte feldgerätespezifisch bis auf einzelne Parameter bzw. auf einzelne Gerätefuntionalitäten individuell vergeben werden, und die Benutzerolle (BR1) in der zu dem Feldgerät (F1) gehörenden Gerätebeschreibungsdatei oder Gerätetreiberdatei gespeichert ist,
d. Freischaltung der der eingegebenen Benutzerkennung (BK1) entsprechenden-Gerätefunktionalitäten;
e. Bedienung des Feldgeräts (F1) im Rahmen der frei geschalteten Gerätefunktionalitäten.

2. Verfahren nach einem der vorhergehenden Ansprüche, **dadurch gekennzeichnet, dass** die Bedienung des Feldgerätes (F1) offline erfolgt.

3. Verfahren nach den Ansprüchen 1 bis 4, **dadurch gekennzeichnet, dass** die Bedienung des Feldgerätes (F1) online erfolgt.

4. Verfahren nach Anspruch 1, wobei es sich bei den Feldgeräten F1, F2, F3, F4) um Sensoren oder um Aktoren handelt

5. Verfahren nach Anspruch 1, wobei ein Feldbussegment SM1 aus mehreren Feldgeräten (F1, F2, F3, F4) besteht die über einen Feldbus FB miteinander verbunden sind

6. Verfahren nach Anspruch 1, wobei kein Kommunikationskanal zum Feldgerät (F1) geöffnet wird, bevor nicht die richtige Kennung (BK) eingegeben wurde.

7. Verfahren nach Anspruch1, wobei aus einer DD / EDD heraus, ein Programme gestartet wird.

8. Verfahren nach dem vorherigen Anspruch, wobei Programme mittels OCX oder AcitveX Befehlen gestartet werden.

9. Verfahren nach Anspruch 1, wobei eine Rahmen-Applikation vorgesehen ist, in der Gerätetreiber für die Feldgeräte implementiert sind.

## Claims

1. Process for the secure operation of a field device (F1, F2, F3, F4) used in automation engineering which can be connected to an operating unit (WS1; BE) via a communication connection, said process comprising the following steps:
a) Invocation of an operating program for field devices (F1, F2, F3, F4);
b) Selection of the field device (F1);
c) Invocation of a device description file (DTMF1) pertaining to this field device (F1) that describes the functionality and the properties of the field device (F1);
d) Execution of a security program (SA1) which is assigned to the device description file (DTMF1), with the following partial steps:
a. Interrogation of a user code (BK1);
b. Entry of the user code (BK1);
c. Verification of the user code (BK1) entered using a saved user role (BR1) which contains a directory of people and their specific authorizations, wherein access rights are individually assigned in a way that is specific to the field device, with the exception of individual parameters or individual device functionalities, and wherein the user role (BR1) is saved in the device description file or the device driver file pertaining to the field device (F1);
d. Enablement of the device functionalities that correspond to the user code (BK1) entered;
e. Operation of the field device (F1) within the framework of the device functionalities that have been enabled.

2. Process as claimed in one of the previous claims, **characterized in that** the field device (F1) is operated offline.

3. Process as claimed in Claims 1-4, **characterized in that** the field device (F1) is operated online.

4. Process as claimed in Claim 1, wherein the field devices (F1, F2, F3, F4) are sensors or actuators.

5. Process as claimed in Claim 1, wherein a field bus segment SM1 consists of several field devices (F1, F2, F3, F4), which are connected to one another via a field bus (FB).

6. Process as claimed in Claim 1, wherein the right code (BK) must first be entered before a communication channel to field device (F1) is opened.

7. Process as claimed in Claim 1, wherein a program is started from a DD / EDD.

8. Process as claimed in the previous claim, wherein programs are started using OCX or ActiveX commands.

9. Process as claimed in Claim 1, wherein a framework application is provided in which device drivers for the field devices are implemented.

## Revendications

1. Procédé destiné à l'utilisation sûre d'un appareil de terrain (F1, F2, F3, F4) de la technique d'automatisation pouvant être relié par l'intermédiaire d'une liaison de communication avec une unité de commande (WS1, BE), avec les étapes de procédé suivantes :
a) Appel d'un programme de commande pour les appareils de terrain (F1, F2, F3, F4) ;
b) Sélection de l'appareil de terrain (F1) ;
c) Appel d'un fichier de description d'appareil (DTMF1 ) appartenant à cet appareil de terrain (F1), qui décrit la fonctionnalité et les propriétés de l'appareil de terrain (F1) ;
d) Exécution d'un programme de sécurité (SA1), lequel est attribué au fichier de description d'appareil (DTMF1), avec les étapes partielles suivantes :
a. Interrogation d'un code utilisateur (BK1) ;
b. Entrée du code utilisateur (BK1) ;
c. Vérification du code utilisateur (BK1) entré sur la base d'un rôle utilisateur (BR1) enregistré, qui contient un répertoire de personnes et leurs autorisations respectives ; les droits d'accès étant attribués individuellement, de façon spécifique à l'appareil de terrain, à l'exception de certains paramètres et de certaines fonctionnalités d'appareil, et le rôle utilisateur (BR1) étant enregistré dans le fichier de description d'appareil ou le fichier de pilote d'appareil appartenant à l'appareil de terrain (F1) ;
d. Déblocage des fonctionnalités d'appareil correspondant au code utilisateur (BK1) entré ;
e. Utilisation de l'appareil de terrain (F1) dans le cadre des fonctionnalités d'appareil débloquées.

2. Procédé selon la revendication 1, **caractérisé en ce que** l'utilisation de l'appareil de terrain (F1) s'effectue hors ligne.

3. Procédé selon la revendication 1, **caractérisé en ce que** l'utilisation de l'appareil de terrain (F1) s'effectue en ligne.

4. Procédé selon la revendication 1, pour lequel il s'agit, concernant les appareils de terrain (F1, F2, F3, F4), de capteurs ou d'actionneurs.

5. Procédé selon la revendication 1, pour lequel un segment de bus de terrain SM 1 est constitué de plusieurs appareils de terrain (F1, F2, F3, F4), qui sont reliés entre eux par l'intermédiaire d'un bus de terrain (FB).

6. Procédé selon la revendication 1, pour lequel aucun canal de communication n'est ouvert vers l'appareil de terrain (F1) avant que le bon code (BK) n'ait été entré.

7. Procédé selon la revendication 1, pour lequel un programme est démarré à partir d'une description DD / EDD.

8. Procédé selon la revendication précédente, pour lequel des programmes sont démarrés au moyen de commandes OCX ou ActiveX.

9. Procédé selon la revendication 1, pour lequel est prévu une application cadre, dans laquelle sont implémentés des pilotes pour les appareils de terrain.
